(19) Europäisches Patentamt

European Patent Office

Office européen des brevets

(11) EP 0 547 936 B1

## (12) FASCICULE DE BREVET EUROPEEN

(45) Date de publication et mention
de la délivrance du brevet:
**08.05.1996 Bulletin 1996/19**

(51) Int Cl.$^6$: **G01M 9/02**

(21) Numéro de dépôt: **92403262.6**

(22) Date de dépôt: **03.12.1992**

(54) **Procédé et installation pour la génération de rafales d'air à haute enthalpie non pollué**

Verfahren und Vorrichtung zur Erzeugung bei Hochenthalpie von nicht verschmutzten Luftstössen

Method and device for generating non contaminated air gust by high enthalpy

(84) Etats contractants désignés:
**BE CH DE DK ES GB GR IT LI NL SE**

(30) Priorité: **18.12.1991 FR 9115708**

(43) Date de publication de la demande:
**23.06.1993 Bulletin 1993/25**

(73) Titulaire: **AEROSPATIALE Société Nationale Industrielle**
**F-75781 Paris Cédex 16 (FR)**

(72) Inventeurs:
- **Sava, Pierre**
  **F-92290 Chatenay-Malabry (FR)**
- **Chevalier, Alain**
  **F-18000 Bourges-Asnières (FR)**
- **Minard, Jean-Pierre**
  **F-18500 Allois (FR)**
- **Piton, Dominique**
  **F-18290 Civray (FR)**

- **Pradet, Gérard**
  **F-18570 Le Subdray (FR)**

(74) Mandataire: **Rinuy, Santarelli**
**14, avenue de la Grande Armée**
**F-75017 Paris (FR)**

(56) Documents cités:
**EP-A- 0 328 167**    **FR-A- 2 633 677**
**US-A- 3 505 867**    **US-A- 3 744 305**

- **SOVIET PATENTS ABSTRACTS Derwent Publications Ltd., London, GB; Section EI, Week 9004, AN 90-028522/04, class S, 7 mars 1990; & SU - A - 972931 (V.V. KISLYKH) 07.08.1989**
- **ICIASF '89 RECORD Septembre 1989, pages 19-28, DE; M.L. BUCK et al.: "Non-isentropic effects on the wrdc 20 inch hypersonic wind tunnel calibration"**

## Description

L'invention concerne un dispositif et un procédé pour la génération pendant au moins plusieurs secondes d'un écoulement d'air à haute enthalpie non pollué à une vitesse correspondant à MACH 6 environ (on parle couramment, à ces vitesses, d'écoulement hypersonique).

Elle vise notamment, mais pas exclusivement, la génération d'un écoulement d'air non pollué dans un large domaine de vol et pendant des durées de simulation suffisantes à l'étude du fonctionnement, en régime stabilisé, de statoréacteurs à combustion supersonique du type désigné sous l'appellation usuelle de "superstatoréacteur" ou "Super-Stato".

L'invention peut également s'appliquer, à titre d'autre exemple, à l'étude du comportement de matériaux dans des écoulements hypersoniques.

La mise en oeuvre d'un moteur du type superstatoréacteur paraît indispensable à la propulsion des futurs véhicules hypersoniques, qu'il s'agisse de lanceurs, de missiles, d'avions ou autres.

Les essais au sol de ces superstatoréacteurs nécessitent la simulation de nombres de MACH élevés et par conséquent la génération d'écoulements d'air de haute enthalpie.

Les moyens d'essais de statoréacteurs existant en Europe sont limités à la simulation de nombres de MACH inférieurs à 6,5, soit une valeur d'environ 1800 K pour la température de l'air destiné à être injecté dans un moteur à tester. Or MACH 6,5 n'est qu'au début de la plage d'utilisation des superstatoréacteurs, lesquels sont prévus pour aller jusqu'à des nombres de MACH de 12 et plus.

On a bien essayé d'adapter les moyens d'essais connus pour repousser la limite précitée de MACH 6,5 mais de façon imparfaite (pollution importante de l'air).

Ce document US-3.744.305 enseigne, pour générer un écoulement d'air à des vitesses hypersoniques de l'ordre de MACH 8 à MACH 10, de pressuriser une enceinte avec de l'air à une pression de 100 à 200 atmosphères et à une température de 5500°R (3060°K) à 6000°R (3336°K), puis d'injecter un milieu gazeux adapté par contact avec l'air sous pression à réagir de façon exothermique en sorte de maintenir la pression et la température de l'air en train de s'échapper rapidement de l'enceinte. Il y a donc une réaction chimique, ce qui est incompatible avec l'obtention d'un air non pollué.

La principale difficulté est de porter à haute température l'air d'alimentation destiné à un moteur à tester, sans toutefois polluer cet air et en restant le plus près possible des caractéristiques d'un régime de vol réel (notamment durée d'au moins plusieurs secondes).

Les moyens d'essais classiques pour statoréacteurs, avec chauffage de l'air par échange thermique ou par combustion dans un brûleur avec réoxygénation ne sont plus utilisables au delà de MACH 6,5.

Les réchauffeurs à accumulation ou en continu sont en limite technologique ; c'est ainsi par exemple que les brûleurs à hydrogène fournissent un mélange d'air et de vapeur d'eau où la quantité d'eau perturbe de façon très sensible la combustion au delà de MACH 6,5, enpêchant toute étude fiable de combustion.

L'emploi de torches à plasma peut paraître envisageable mais, outre qu'elles sont chères, ces dernières ont l'inconvénient de provoquer une dissociation des molécules d'air propre à perturber la cinétique chimique de la combustion.

Quant aux dispositifs désignés sous l'appellation de "tubes à chocs", ils ne permettent de générer de fortes enhalpies que pendant des durées de quelques millisecondes, très insuffisantes pour permettre d'étudier des combustions stabilisées.

Un exemple de tunnel à choc générant des rafales très courtes, est donné par le document US-3.505.867.

Il est donc apparu nécessaire de développer de nouveaux moyens d'essais de moteurs pour la mise au point des superstatoréacteurs.

L'invention a ainsi pour objet la génération d'écoulements d'air non pollué, et à haute température génératrice (au moins 1800 K) pendant des durées de plusieurs secondes de manière à permettre notamment des simulations de combustion hypersonique stabilisée à des nombres de MACH au moins égaux à 6,5, et pouvant atteindre 8 voire plus, le tout pour un coût modéré.

Elle propose à cet effet un échauffement par compression de l'air destiné à alimenter le moteur à tester.

En effet, ainsi qu'on le sait, la compression d'une quantité d'air donnée provoque un échauffement de celle-ci.

Si cette compression est effectuée en condition adiabatique, c'est-à-dire sans échange de chaleur avec le milieu environnant, et en assimilant l'air à un gaz parfait au sens thermodynamique du terme, les équations de la thermodynamique permettent d'écrire :

$$\frac{T}{To} = \left(\frac{P}{Po}\right)^{\frac{\gamma-1}{\gamma}}$$

où :

- To et Po sont la température et la pression de la quantité d'air considérée avant compression
- T et P sont la température et la pression de cette quantité d'air après compression
- $\gamma$ est le rapport, supposé constant, des capacités calorifiques de cet air, à pression et volume constants respectivement.

En prenant $\gamma = 1,3$ la température finale T obtenue par une compression s'exprime donc, en fonction de la température de départ To et du taux de compression (P/Po) par la relation :

$$T = To \cdot \left(\frac{P}{Po}\right)^{0,231}$$

Cette relation met en évidence la nécessité, pour obtenir des résultats significatifs, de disposer soit d'un taux de compression élevé, soit d'une température initiale déjà élevée.

Pour effectuer la compression de l'air d'alimentation (ou air utile), l'invention enseigne d'utiliser, sans interposition d'un quelconque écran, une rafale d'air à haute pression telle que peuvent en délivrer des souffleries à rafales classiques. Le coût d'investissement de l'invention en est réduit d'autant.

Un exemple de soufflerie à rafale est donné par le document FR-2.633.677, qui se limite à des températures de 40° à 90°C et des vitesses de 200 à 300 m/s.

L'emploi d'une rafale d'air pour la compression de l'air utile, sans interposition d'un écran matériel, conduit à des performances d'autant meilleures qu'il n'y a pas (ou peu) de mélange entre la rafale d'air et l'air utile et donc que l'aire de l'interface entre ces masses d'air est petite. Dans ce but, l'invention enseigne de donner à la masse d'air utile la forme d'une veine allongée de section circulaire, polygonale ou autre, et de délivrer la rafale d'air sur une tranche de cette veine tout en la confinant latéralement. Pour ce faire la masse d'air d'alimentation est enfermée dans un boyau ou tunnel à parois thermiquement isolantes, c'est-à-dire quasi adiabatique.

Pour une masse d'air utile donnée, à pression et température données, plus la forme imposée à l'air utile est allongée (c'est-à-dire plus le rapport longueur/section est grand) moindre est l'aire de l'interface et moindre est le mélange entre les masses d'air.

Toutefois, plus cette forme imposée à l'air utile est allongée, plus les échanges thermiques entre cet air utile et le tunnel de confinement qui le contient deviennent significatifs et plus on s'éloigne d'un état de compression adiabatique.

Il y a donc un compromis à trouver quant à l'allongement de la veine d'air utile (rapport longueur/section) de manière à minimiser à la fois le mélange des masses d'air (donc l'aire d'interface avec la rafale d'air) et les échanges thermiques (l'aire d'interface avec le tunnel de confinement).

Bien entendu les pertes thermiques seront d'autant plus faibles que le temps d'échange aux frontières de la masse d'air utile est court, et donc que la compression est rapide et que le débit de la rafale d'air est important, mais aussi que l'air utile est rapidement utilisé après la compression.

Cet air utile comprimé, donc échauffé, est lui-même disponible sous la forme d'une rafale utile de débit massique $d_r$ et de durée $t_r$, et donc de masse totale donnée par :

$$M_r = d_r \cdot t_r$$

Les lois de la thermodynamique pour les gaz parfaits permettent de déduire le volume V nécessaire au stockage, sous la pression Po et à la température To, de cette masse d'air utile :

$$V = r \cdot (To/Po) \cdot M_r$$

où :

- r est une constante caractéristique du gaz considéré, exprimée en énergie par degré et par unité de masse (cette constante vaut environ 287 J/°K/kg pour l'air).

Cette relation montre que le volume de stockage à l'intérieur du tunnel est d'autant plus faible que la pression de stockage Po est élevée, ce qui va à l'encontre d'un taux de compression élevé puisqu'en pratique la pression maximale susceptible d'être obtenue après compression est limitée par la pression maximale de la rafale d'air de compression.

L'invention propose ainsi un procédé de génération d'une rafale d'air à haute enthalpie non pollué pendant plusieurs secondes selon lequel :

- on préchauffe à une température donnée et on stocke temporairement sous une pression donnée une masse d'air utile, destinée à constituer la rafale d'air à haute enthalpie, sous la forme d'une veine statique allongée à l'intérieur d'un tunnel de confinement à paroi thermiquement isolante,
- on maintient obturé un orifice aval de ce tunnel et on applique, sur la tranche amont de cette veine, une rafale d'air à haute pression propre à comprimer la masse d'air utile de façon quasi adiabatique jusqu'à obtenir une température d'air utile d'au moins 1800 K,
- on ouvre l'orifice aval et on continue l'application de la rafale d'air à haute pression, grâce à quoi la masse d'air utile est chassée à travers l'orifice aval en une rafale utile, avec une température restant constante pendant plusieurs secondes.

Selon des dispositions préférées, éventuellement combinées, de ce procédé :

- on préchauffe la masse d'air utile à une température d'au moins 500 K,
- on préchauffe la masse d'air utile à 1250 K environ,
- on préchauffe la masse d'air utile par passage dans un préchauffeur statique,
- on comprime la masse d'air utile avec un coefficient de compression d'au moins 5,
- on préchauffe la rafale d'air à haute pression à au moins approximativement la même température que la masse d'air utile,
- on préchauffe la masse d'air utile et la rafale d'air à haute pression par passage dans un réchauffeur intégré au tunnel,
- la masse d'air utile est d'au moins 5 Kg,
- la veine allongée a un rapport de sa longueur à sa largeur moyenne compris entre 20 et 150,
- ce rapport vaut entre 25 et 30.

L'invention propose également une installation pour la génération d'une rafale d'air hypersonique non pollué, comportant :

- une soufflerie à rafale adaptée à injecter une rafale d'air sous pression dans une ligne de circulation d'air sous pression,
- un tunnel adiabatique de confinement muni d'une entrée raccordée à cette ligne de circulation d'air sous pression et d'un orifice de sortie muni d'un dispositif d'obturation temporaire, et destiné à contenir une masse d'air utile sous la forme d'une veine allongée,
- un élément de réchauffage pour le chauffage de cette masse d'air utile à une température donnée,
- un ensemble de commande adapté à déclencher l'arrivée d'une rafale d'air en provenance de la soufflerie sur la masse d'air utile en sorte de la comprimer et de l'échauffer puis à libérer l'orifice de sortie du tunnel vis à vis du dispositif d'obturation temporaire,

Selon des dispositions préférées, éventuellement combinées, de cette installation :

- l'élément de réchauffage est raccordé entre la ligne de circulation d'air sous pression et l'entrée du tunnel adiabatique de confinement,
- l'élément de réchauffage et le tunnel adiabatique de confinement font partie d'un même tunnel global,
- ce tunnel global comporte une coque externe longée intérieurement par une couche d'isolation, formée d'une enveloppe cylindrique fermée par des fonds dans lesquels sont respectivement ménagés un orifice d'entrée et l'orifice de sortie,
- la couche d'isolation est séparée de l'écoulement d'air par des écrans de protection,
- des éléments chauffants sont prévus pour le préchauffage de ces écrans de protection,
- dans l'épaisseur de cette couche et des écrans de protection sont ménagés des passages d'équilibrage en pression,
- l'élément de réchauffage comporte un réseau annulaire fixe de tubes parallèles à l'axe du tunnel global,
- les tubes de ce réseau sont ouverts en leurs extrémités,
- l'élément de réchauffage est connecté à un système de préchauffage,
- le système de préchauffage comporte une alimentation d'air sous pression raccordée à l'élément de préchauffage par une ligne traversant un brûleur,
- ce système de préchauffage comporte un bloc d'alimentation électrique connecté électriquement aux tubes pour y générer de la chaleur par effet JOULE,
- le dispositif d'obturation temporaire comporte deux disques à rupture calibrée, dont un disque amont à rupture calibrée à une pression inférieure de la pression obtenue en fin de compression, et un disque aval à rupture calibrée à une pression supérieure à ladite pression, ce disque aval étant muni d'un organe de destruction, et le volume entre les disques communique avec une ligne d'arrivée d'air sous pression destinée à l'équilibrage en pression du disque amont,
- cette ligne communique avec l'entrée du tunnel global,
- l'organe de destruction est de type pyrotechnique,
- le tunnel adiabatique de confinement a un rapport de sa longueur à sa largeur moyenne compris entre 20 et 150,
- ce rapport vaut entre 25 et 30.

Des objets, caractéristiques et avantages de l'invention ressortent de la description qui suit, donnée à titre d'exemple non limitatif, en regard des dessins annexés sur lesquels :

- la figure 1 est une vue schématique en perspective d'une installation de génération d'écoulement d'air conforme à l'invention, avec un tunnel auquel est associé un graphique en trois dimensions corrélant, pour toute zone interne du tunnel repérée par son abscisse axiale X, la température locale de l'air présent T en fonction du temps t,
- la figure 2 est une vue schématique en coupe axiale du tunnel de la figure 1,
- la figure 3 est une vue en coupe transversale du tronçon échangeur du tunnel de la figure 2, selon la ligne III-III, et
- la figure 4 est un graphique (température/pression) montrant des domaines de vol simulables par une installation donnée, pour une durée de rafale de 5 s.

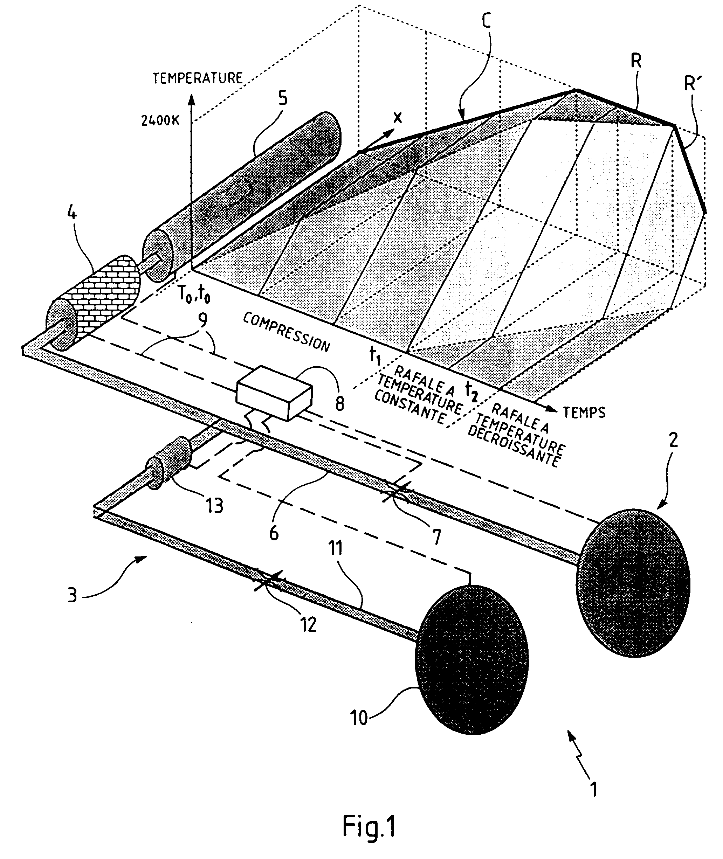

La figure 1 représente de façon schématique une installation repérée 1 dans son ensemble, adaptée à générer un écoulement d'air non pollué à une valeur de MACH au moins égale à 6,5.

Cette installation 1 comporte une soufflerie à rafale schématisée en 2, un système de préchauffage repéré 3 dans son ensemble, un tunnel de réchauffage repéré 4, un tunnel de confinement 5 ici représenté dissocié du tunnel de réchauffage 4, et une ligne de circulation d'air 6 reliant la soufflerie à rafale 2 au tunnel de réchauffage, munie d'une vanne de régulation 7 et à laquelle est connecté le système de préchauffage 3, et un ensemble de commande 8 muni de lignes de commande 9.

La soufflerie à rafale 2 est de tout type connu approprié. Il s'agit en pratique d'une réserve d'air à haute pression, par exemple à 250 bars, souvent constituée d'une pluralité de bouteilles montées en parallèle et dont les vidanges simultanées produisent une rafale d'air injectée dans la ligne 6. La vanne de régulation 7 permet de réguler le débit de cette rafale.

Le système de préchauffage 3, également connu en soi, comporte ici une réserve d'air sous pression 10 (par exemple à une pression de 60 bar) adaptée, lorsqu'elle est ouverte, à délivrer de l'air dans une ligne 11, munie d'une vanne de régulation 12, traversant un élément de chauffage 13, ici un brûleur à hydrogène, et aboutissant à la ligne 6 en aval de la vanne de régulation 7.

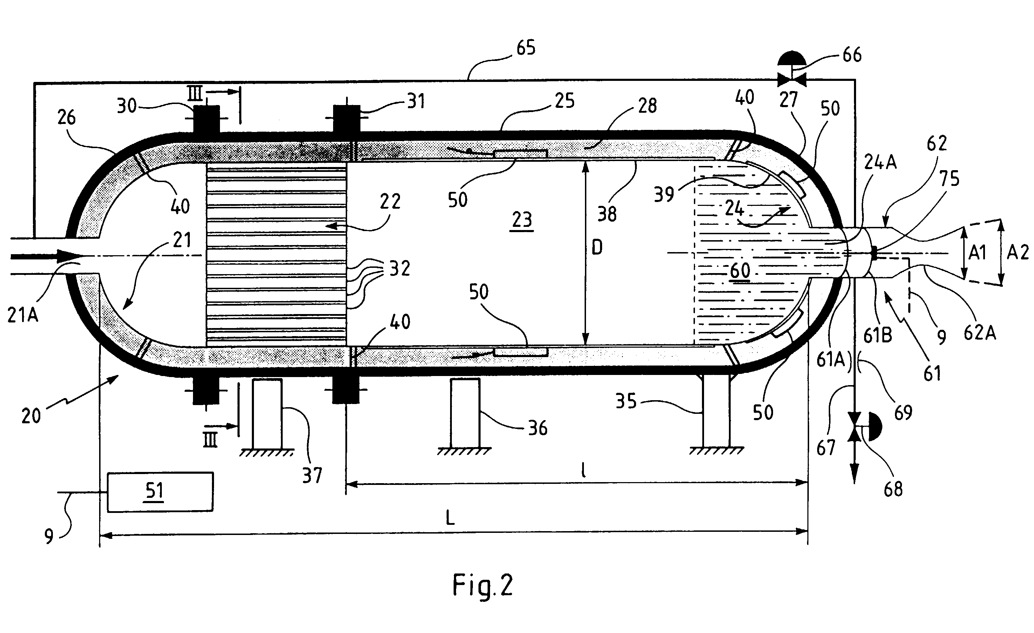

La figure 2 représente plus en détail le tunnel de réchauffage 4 et le tunnel de confinement 5. Ces tunnels font ici partie d'un seul et même tunnel repéré 20.

Le tunnel 20 se présente sous la forme d'un long tube ou boyau comportant un tronçon d'entrée 21 muni d'un orifice d'entrée 21A, un tronçon échangeur 22 constituant le tunnel de réchauffage 4 de la figure 1, un tronçon adiabatique de confinement 23 constituant le tunnel 5 de la figure 1 et un tronçon de sortie 24 muni d'un orifice de sortie 24A.

Le tunnel 20 comporte une coque externe formée d'une enveloppe cylindrique 25 en tôle d'acier pour chaudière fermée à ses extrémités par deux fonds hémisphériques 26 et 27 faisant partie des tronçons d'entrée 21 et de sortie 24. Cette coque est longée intérieurement par une couche d'isolation 28 destinée à minimiser les échanges thermiques entre l'intérieur de ce tube et la coque externe de celui-ci, et rendre ce tunnel 20 adiabatique.

Des bridages 30 et 31 ici de type PN 100 (c'est-à-dire Pression Nominale d'utilisation 100 bar) sont prévus de part et d'autre du tronçon échangeur 22. Leur démontage permet la mise en place de la couche d'isolation 28 et les éléments d'échange de chaleur 32 de ce tronçon 22.

L'accès à l'intérieur du tunnel adiabatique 20 après remontage des bridages est possible soit par l'orifice d'entrée 21A, soit par l'orifice de sortie 24A.

L'ensemble de cette coque repose sur des berceaux de maçonnerie dont l'un, schématisé en 35 et situé en aval, est aménagé en point fixe tandis que cette coque peut se dilater librement sur les autres berceaux, dont deux sont schématisés en 36 ou 37.

Divers orifices (non représentés) sont aménagés dans cette coque, en plus des orifices d'entrée et de sortie 21A et 24A, pour la pénétration de diverses lignes reliant à l'extérieur des capteurs de mesure, des circuits d'équilibrage de pression et d'autres servitudes ; certains de ces éléments seront détaillés ci-dessous.

La couche d'isolation 28 fixée à l'intérieur de la coque 25 permet de protéger celle-ci thermiquement en en maintenant la face interne à une température inférieure à une faible valeur de seuil, ici de 100°C.

La face interne de cette couche d'isolation 28 est protégée mécaniquement par des tôles en acier réfractaire, repérées 38 et 39, destinées à éviter tout entraînement de particules d'isolant par l'air des rafales.

Cette couche d'isolation est en pratique formée d'une pluralité d'éléments collés à la coque 25, entre lesquels sont disposés des joints de dilatation (non représentés) destinés à en permettre un libre débattement relatif en fonction de la température et éviter ainsi l'apparition de contraintes mécaniques trop importantes. Cette couche isolante est ici en un réfractaire du type céramique.

Des passages d'air tels que 40 sont aménagés dans l'épaisseur de la couche d'isolation pour assurer un équilibrage en pression entre les faces interne et externe de cette couche.

Le tronçon d'entrée 21 et son orifice 21A ont pour rôle de collecter et répartir sur l'ensemble de la section interne du tunnel l'air d'une rafale de compression. Cet orifice 21A est raccordé à la ligne 6 à haute pression.

Le rôle du tronçon échangeur 22 est de restituer à l'air d'une rafale de compression des calories emmagasinées pendant la phase de préchauffage.

Ce tronçon échangeur 22 comporte une masse métallique au travers de laquelle on fait passer la rafale de compression.

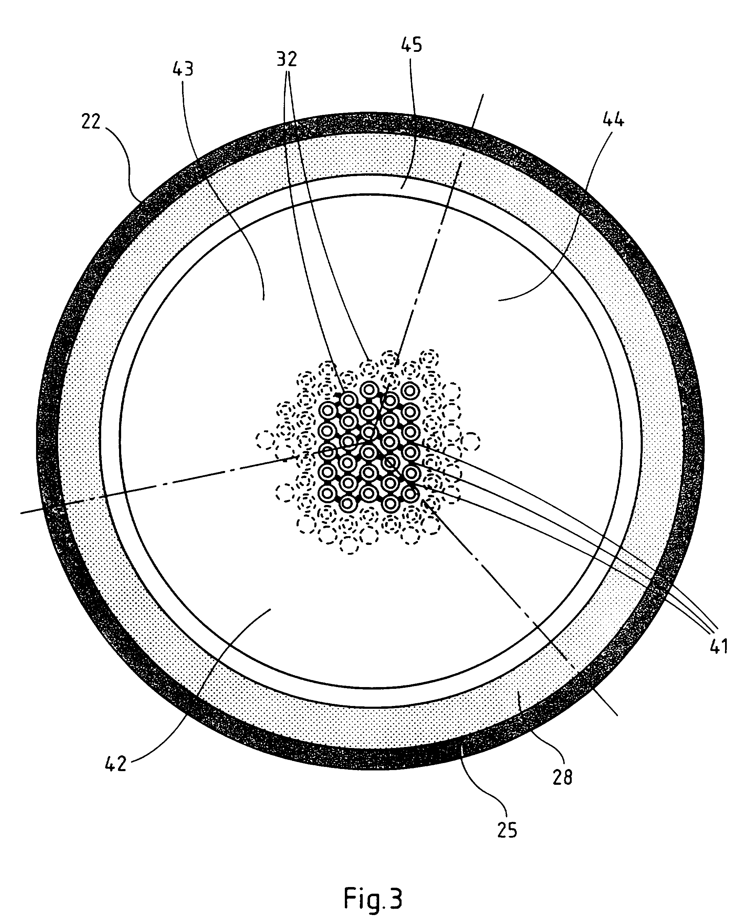

Ainsi que cela ressort plus en détail de la figure 3, cette masse annulaire comporte une pluralité de tubes 32 en acier réfractaire (seulement certains d'entre eux sont représentés) disposées en rangées en quinconce et qui débouchent axialement vers l'amont et vers l'aval.

L'échange thermique entre ces tubes et l'air de rafale se fait sur les faces interne et externe desdits tubes. Des cales isolantes telles que 41 sont placées entre les rangées de tubes pour assurer leur espacement, ainsi que leur retenue axiale lors des rafales.

L'ensemble de ces tubes, ici répartis en trois ensembles identiques repérés 42, 43 et 44, est contenu dans une structure métallique repérée 45 qui maintient ces tubes fixés dans ce tronçon échangeur 22 à l'intérieur de la couche d'isolation.

La mise en température de ces tubes à la température voulue, par exemple 1250 K environ (c'est-à-dire approximativement 1000°C) peut se faire par circulation d'air provenant du système de préchauffage 3.

En variante, cette mise en température des tubes, ici répartis en trois ensembles identiques, peut être réalisée électriquement (sans intervention du système de préchauffage 3 qui peut donc être supprimé : l'orifice 21A peut alors être maintenu fermé par tout moyen connu appropriés pendant la phase de préchauffage) par passage de courant électrique dans les tubes 32 qui font alors office de résistance.

L'alimentation électrique est réalisée sous une tension de 660 V en triphasé en tirant parti de la répartition des tubes en trois groupes : les tubes sont connectés en série au sein de chaque groupe, ces groupes étant montés en parallèle sur chaque phase. La pénétration de l'alimentation électrique est réalisée en zone froide dans le tronçon d'entrée 21 du tunnel grâce à des traversées étanches de la coque 25 (voir les lignes en tiretés 49 de la figure 2).

Le chauffage des tubes jusqu'à la température nominale se fait en un temps de l'ordre de 5 à 6 heures.

De manière préférée, dans la partie aval du tunnel, après les tubes échangeurs 32, des éléments chauffants 50 sont avantageusement montés en paroi de l'isolation 28 afin d'assurer la mise en température des tôles de protection 38 et 39.

La régulation de la montée en température est obtenue par variation de la tension d'alimentation et contrôlée par des sondes de températures (non représentées) placées sur les tubes 32.

L'ensemble de l'installation électrique d'alimentation 51 (voir la figure 2) est en pratique situé à proximité immédiate du tunnel 20.

Selon encore une autre variante, la mise en température des tubes peut être obtenue par circulation d'air chaud, en circuit fermé, généré par chauffage électrique. Dans ce cas des vannes non représentées assurent l'isolement de ce circuit fermé de réchauffage pendant la mise en pression de l'air utile.

Le tronçon adiabatique de confinement 23 est la zone du tunnel 20 en aval du tronçon échangeur 22, à l'extrémité aval de laquelle on obtient, après compression rapide, l'air d'une rafale utile à très haute température. sous la forme d'un bouchon adiabatique schématisé en 60 à la figure 2.

Le tronçon de sortie 24 a pour fonction de capter l'air de ce bouchon 60 pour le canaliser et le diriger, au travers de l'orifice 24A, vers une tuyère d'alimentation de moteur à tester aux conditions de MACH voulues. Cet orifice comporte un dispositif d'ouverture rapide 61 et est raccordé à une tuyère 62 convergente-divergente, avec un col 62A, adaptée au MACH visé, en pratique réalisée en carbone/carbone (c'est-à-dire fibre carbone imprégnée carbone).

Le dispositif d'ouverture rapide 61 comporte deux disques de rupture de type prédécoupé, repérés 61A et 61B, et disposés en série dans le conduit d'orifice 24A.

Le premier disque 61A (dimensionné pour avoir une pression d'éclatement modérée) sert d'isolateur thermique du second disque 61B (dimensionné pour avoir une pression d'éclatement voisine ou égale à la pression de calcul de la coque) vis à vis de l'intérieur du tunnel.

Une ligne de dérivation schématisée en 65 partant de la zone de jonction de la ligne à haute pression 6 à l'orifice d'entrée 21A, permet un remplissage du volume compris entre les disques 61A et 61B de manière à équilibrer autant que possible en pression le premier disque 61A amont. Cette ligne 65 est munie d'une vanne 66 et se prolonge au delà du volume compris entre les disques par une ligne 67 également munie d'une vanne 68 et aussi d'un régulateur de débit 69.

Une fuite calibrée par le régulateur 69 assure l'évacuation de l'air chaud dû à l'augmentation de pression, ce qui permet de maintenir le disque aval 61B à une faible température de l'ordre de 20 à 50°C.

Une charge pyrotechnique 75 est située sur le disque aval 61B de manière à provoquer son éclatement en temps utile lorsque l'air utile du bouchon 60 est formé. La vidange du volume entre les disques provoque alors l'éclatement du disque amont 61A et l'écoulement dans la tuyère d'essai 62, sous forme d'une rafale, l'air du bouchon 60.

A titre d'exemple, l'installation décrite ci-dessous est destinée à alimenter une chambre de superstatoréacteur de section d'entrée A1 de 0,035 $m^2$ avec une rafale d'air utile de 30kg/sec à 2400 K pendant 5 secondes, avec mise en oeuvre de la soufflerie à rafales de la Société AEROSPATIALE située au SUBDRAY près de Bourges.

Compte tenu des performances de cette soufflerie, de l'estimation des pertes thermiques, du choix de technologie du réchauffeur 22, ces paramètres de fonctionnement sont satisfaits avec :

- . Température de l'air de remplissage du tunnel (chauffé par le réchauffeur)     To = 1250 K
- . Pression de remplissage du tunnel     Po = 4,11 bar
- . Pression maximale d'utilisation après compression     Pr = 80 bar
- . Température d'utilisation     Tr = 2400 K
- . Volume interne du tronçon adiabatique de confinement (après réchauffeur)     V = 131 m$^3$
- . Soit pour un diamètre interne     D = 1,8 m
- . Longueur du tunnel     l = 51,5 m
- . Allongement     l/D = 28,6
- . Masse d'air à chauffer dans le réchauffeur, environ :     2500 kg
- . Débit d'alimentation du tunnel pour la compression :     300 kg/s
- . Temps de montée de 4,11 à 80 bar:     6,1 sec
- . Diamètre externe de l'enveloppe du tunnel     2,5 m
- . Longueur de cette enveloppe     L = 67,5 m
- . Longueur des tubes     10 m
- . Volume interne de l'enveloppe     171 m$^3$
- . Pression de calcul de l'enveloppe     85 bar
- . Température de calcul de l'enveloppe     100°C
- . Pression de tarage du disque aval 61B     85 bar
- . Pression de tarage du disque amont 61A     40 bar

Le code de calcul utilisé pour l'enveloppe a été le code CODAP (c'est-à-dire code normalisé pour le calcul des appareils à pression).

La génération de la rafale d'air visée est obtenue comme suit :

1. le tunnel 20 est initialement plein d'air à pression et température atmosphérique,

2. le tronçon échangeur, les écrans 38, 39 et l'air du tronçon adiabatique de confinement sont portés à la température nominale de 1250 K, par chauffage électrique,

3. de l'air provenant de la soufflerie est injecté dans le tunnel au travers du tronçon échangeur, en sorte de balayer l'air initial jusqu'à obtention dans le tunnel de conditions homogènes à la pression Po et à la température To voulues. On appréciera que, le tronçon échangeur étant statique, l'air est chauffé sans être pollué,

4. à l'instant $t_o$ une rafale d'air à fort débit permet d'augmenter la pression dans le tunnel et de comprimer l'air de la phase 3 des conditions (Po, To) à (Pr, Tr). L'évolution au cours du temps de la température de l'air à l'extrémité aval du tunnel est représentée par la courbe C en trait épais dans le graphique en trois dimensions de la figure 1. Cette température croît pendant toute cette phase de compression,

5. la commande de la charge pyrotechnique 75 à l'instant $t_1$ provoque l'éclatement quasi-simultané des disques 61B puis 61A, suite à quoi l'air du bouchon 60 de la figure 2 est éjecté sous la forme d'une rafale R à température constante. Cette rafale d'air utile dure d'autant plus longtemps que la masse d'air stockée en phase 3 est importante et que le débit de rafale est faible,

6. cette rafale d'air utile se termine en $t_2$, après consommation complète de la masse d'air stockée en phase 3 : on obtient alors une rafale R' à température décroissante qui peut être mise à profit pour étudier le comportement du superstatoréacteur en régime transitoire.

On appréciera que pour une zone intermédiaire du tunnel entre le tronçon réchauffeur et l'orifice de sortie, il y a d'abord, à partir de $t_o$, une croissance de température d'autant plus longue que cette zone est proche de l'orifice de sortie, puis un palier puis une décroissance.

Le fait d'admettre la rafale à forte pression de la phase 4 à travers le réchauffeur 4 a l'avantage d'assurer une variation continue de la température le long du tunnel, ce qui permet de limiter l'effet thermique des mélanges de gaz dans le tunnel et d'obtenir la rafale R'.

On peut, en variante, choisir d'injecter l'air de compression à l'état "froid" c'est-à-dire sans préchauffage.

L'ensemble des phases 1 à 6 peut être au choix obtenu à l'aide d'une rafale unique, ou de plusieurs rafales plus courtes décalées dans le temps. Toutefois le cas d'une rafale unique a l'avantage de minimiser les pertes thermiques.

La simulation d'une rafale de 30kg/s à 2400 K pendant 5 secondes correspond à une pression dynamique $P_{dyn}$ d'environ 1,1 bar avec un nombre de MACH de 7,6, soit une section d'entrée de chambre précitée A1 de 0,035 m$^2$ et la section de sortie de chambre A2 de 0,105 m$^2$ (ces sections sont reportées sur la figure 2).

L'installation décrite ci-dessus permet des rafales plus longues si on réduit la section de tuyère et donc le débit de sortie. De la sorte on peut couvrir, outre le point de vol (Pr, Tr ou nombre de MACH et altitude) qui a servi au dimensionnement, un large domaine de vol en veine forcée, en prenant des températures ou des débits plus faibles pour la rafale utile, en jouant sur les valeurs de Po, To avant compression. Ainsi l'installation précitée permet en particulier d'explorer le domaine MACH 6 - MACH 8.

Le raisonnement de dimensionnement est le suivant : le calibre (sections) du superstatoréacteur et un point de vol donné (nombre de MACH et altitude) permettent de déduire la pression, la température et le débit massique de la rafale à générer ; le choix de la pression maximale admissible pour le tunnel, de la température maximale de réchauffage et de la durée de rafale permettent de dimensionner le tunnel.

La donnée des dimensions et performances du tunnel et de sa soufflerie permettent ensuite de définir une large gamme de points de simulation caractérisés par la pression de simulation $P_{i2}$, la température de simulation $T_{i2}$ et la durée de la rafale.

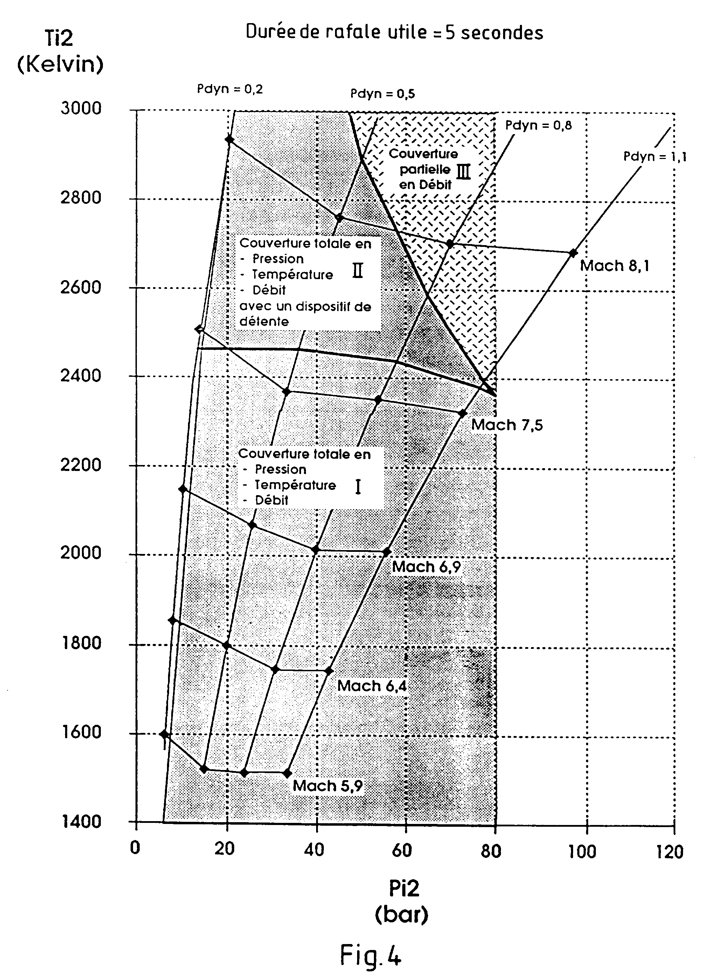

La figure 4 donne la couverture du tunnel adiabatique du SUBDRAY (voir ci-dessus) ainsi déterminée pour une durée de rafale utile de 5 secondes. La limitation du domaine (repéré I) de couverture totale en pression, température et débit se fait par la limite de pression $P_{i2}$ à moins de 80 bars et la limite de température au débit maximum visé (pour la durée de rafale envisagée).

Il est possible (domaine II) de dépasser la température de 2400 K pour les simulations à faible pression dynamique (d'où faible Pi2 et faible débit) ; en effet on a alors la possibilité d'alimenter le tunnel à une pression supérieure à $P_{i2}$ et d'augmenter encore l'échauffement par compression, un dispositif de pertes de charges (détente) étant alors interposé entre le tunnel et le superstatoréacteur. Si l'on admet de diminuer la durée de rafale utile ou le calibre du superstatoréacteur (donc le débit) il est possible d'augmenter encore la couverture vers les fortes $T_{i2}$ et fortes $P_{i2}$ (domaine III).

Sur cette figure sont également reportées diverses courbes à nombre de MACH constant, et à pression dynamique constante, respectivement.

Le tableau suivant donne le nombre de MACH maximum simulable pour différentes pressions dynamiques $P_{dyn}$ :

| Mach maxi $P_{dyn}$ | Mach maxi simulable pour t rafale = 5 sec | | |
|---|---|---|---|
| | sans dispositif de détente | avec dispositif de détente | avec couverture part. en débit |
| 0,2 | 7,45 | › 8,5 | – |
| 0,5 | 7,61 | 8,3 | – |
| 0,8 | 7,64 | 7,9 | 8,34 |
| 1,1 | 7,59 | 7,6 | 7,66 |

Pour des températures supérieures à 3000 K les phénomènes de dissociations deviennent important et les modèles utilisés ne permettent plus d'afficher un nombre de MACH réaliste.

La génération d'air chaud à grande vitesse peut être intéressante pour essayer et choisir des matériaux pour véhicules hypersoniques.

Une tuyère munie d'un caisson à dépression montée en sortie du tunnel peut fournir un écoulement à une pression statique et une température correspondants aux conditions de vol.

Il apparaît en conclusion que le tunnel adiabatique est un principe de soufflerie permettant une alimentation en air non pollué de superstatoréacteurs dans un large domaine de vol et pour des durées de simulations suffisantes à l'étude du fonctionnement de ces moteurs.

L'utilisation de ce moyen pour l'étude de matériaux dans un écoulement hypersonique est envisageable.

L'homme de métier est en mesure, compte tenu des indications précitées, de matérialiser le bloc de commande 8 et les lignes de commande 9.

Il va de soi que la description qui précède n'a été proposée qu'à titre d'exemple non limitatif et que de nombreuses variantes peuvent être proposées par l'homme de l'art sans sortir du cadre de l'invention.

**Revendications**

1. Procédé de génération d'une rafale d'air à haute enthalpie non pollué pendant plusieurs secondes selon lequel :

   - on préchauffe (4, 22) à une température donnée (To) et on stocke (5, 23) sous une pression donnée (Po) une masse d'air utile, destinée à constituer la rafale d'air à haute enthalpie, sous la forme d'une veine statique allongée à l'intérieur d'un tunnel de confinement (23, 5) à paroi (28) thermiquement isolante,
   - on maintient obturé un orifice aval (24A) de ce tunnel et on applique, sur la tranche amont de cette veine, une rafale d'air à haute pression propre à comprimer la masse d'air utile de façon quasi adiabatique jusqu'à obtenir une température d'air utile d'au moins 1800 K,
   - on ouvre l'orifice aval et on continue l'application de la rafale d'air à haute pression, grâce à quoi la masse d'air utile est chassée à travers l'orifice aval (24A) en une rafale utile, avec une température restant constante pendant plusieurs secondes.

2. Procédé selon la revendication 1, caractérisé en ce qu'on préchauffe la masse d'air utile à une température d'au moins 500 K.

3. Procédé selon la revendication 2, caractérisé en ce qu'on préchauffe la masse d'air utile à 1250 K environ.

4. Procédé selon l'une quelconque des revendications 1 à 3, caractérisé en ce qu'on préchauffe la masse d'air utile par passage dans un préchauffeur statique (4, 22).

5. Procédé selon l'une quelconque des revendications 1 à 4, caractérisé en ce qu'on comprime la masse d'air utile avec un coefficient de compression d'au moins 5.

6. Procédé selon l'une quelconque des revendications 1 à 5, caractérisé en ce qu'on préchauffe la rafale d'air à haute pression à au moins approximativement la même température que la masse d'air utile.

7. Procédé selon l'une quelconque des revendications 1 à 6, caractérisé en ce qu'on préchauffe la masse d'air utile et la rafale d'air à haute pression par passage dans un réchauffeur (22) intégré au tunnel (20).

8. Procédé selon l'une quelconque des revendications 1 à 7, caractérisé en ce que la masse d'air utile est d'au moins 5 Kg.

9. Procédé selon l'une quelconque des revendications 1 à 8, caractérisé en ce que la veine allongée a un rapport de sa longueur (1) à sa largeur moyenne (D) compris entre 20 et 150.

10. Procédé selon la revendication 9, caractérisé entre ce que ce rapport vaut entre 25 et 30.

11. Installation pour la génération d'une rafale d'air à haute enthalpie non pollué, comportant :

    - une soufflerie à rafale (2) adaptée à injecter une rafale d'air sous pression dans une ligne (6) de circulation d'air sous pression,
    - un tunnel adiabatique de confinement (5, 23) muni d'une entrée (21A) raccordée à cette ligne (6) de circulation d'air sous pression et d'un orifice de sortie (24A) muni d'un dispositif (61) d'obturation temporaire, et destiné à contenir une masse d'air utile sous la forme d'une veine allongée,
    - un élément de réchauffage (4, 22) pour le chauffage de cette masse d'air utile à une température donnée,
    - un ensemble de commande (8, 9, 51, 75) adapté à déclencher l'arrivée d'une rafale d'air en provenance de la soufflerie sur la masse d'air utile en sorte de la comprimer et de l'échauffer puis à libérer l'orifice de sortie (24A) du tunnel vis à vis du dispositif d'obturation temporaire.

12. Installation selon la revendication 11, caractérisée en ce que l'élément de réchauffage (22) est raccordé entre la ligne (6) de circulation d'air sous pression et l'entrée du tunnel adiabatique de confinement.

13. Installation selon la revendication 12, caractérisée en ce que l'élément de réchauffage (22) et le tunnel adiabatique de confinement (23) font partie d'un même tunnel global (20).

14. Installation selon la revendication 13, caractérisée en ce que ce tunnel global (20) comporte une coque externe longée intérieurement par une couche d'isolation (28), formée d'une enveloppe cylindrique (25) fermée par des fonds (26, 27) dans lesquels sont respectivement ménagés un orifice d'entrée (21A) et l'orifice de sortie (24A).

15. Installation selon la revendication 14, caractérisée en ce que la couche d'isolation est séparée de l'écoulement d'air par des écrans de protection (38, 39).

16. Installation selon la revendication 15, caractérisée en ce que des éléments chauffants (50) sont prévus pour le préchauffage de ces écrans de protection.

17. Installation selon l'une quelconque des revendications 14 à 16, caractérisée en ce que dans l'épaisseur de cette couche sont ménagés des passages (40) d'équilibrage en pression.

18. Installation selon l'une quelconque des revendications 13 à 17, caractérisée en ce que l'élément de réchauffage (22) comporte un réseau fixe de tubes (32) parallèles à l'axe du tunnel global.

19. Installation selon la revendication 18, caractérisée en ce que les tubes de ce réseau sont ouverts en leurs extrémités.

20. Installation selon la revendication 18 ou la revendication 19, caractérisée en ce que l'élément de réchauffage est connecté à un système de préchauffage (4, 51).

21. Installation selon la revendication 20, caractérisée en ce que le système de préchauffage comporte une alimentation d'air sous pression (10) raccordée à l'élément de préchauffage par une ligne (3) traversant un brûleur (13).

22. Installation selon la revendication 20, caractérisée en ce que ce système de préchauffage comporte un bloc d'alimentation électrique (51) connecté électriquement aux tubes pour y générer de la chaleur par effet JOULE.

23. Installation selon l'une quelconque des revendications 13 à 22, caractérisée en ce que le dispositif d'obturation temporaire (61) comporte deux disques (61A, 61B) à rupture calibrée, dont un disque amont (61A) à rupture calibrée à une pression inférieure de la pression obtenue en fin de compression, et un disque aval (61B) à rupture calibrée à une pression supérieure à ladite pression, ce disque aval étant muni d'un organe de destruction (75), et le volume entre les disques communiquant avec une ligne (65) d'arrivée d'air sous pression destinée à l'équilibrage en pression du disque amont.

24. Installation selon la revendication 23, caractérisée en ce que cette ligne communique avec l'entrée du tunnel global.

25. Installation selon la revendication 23, caractérisée en ce que l'organe de destruction est de type pyrotechnique.

26. Installation selon l'une quelconque des revendications 11 à 25, caractérisée en ce que le tunnel adiabatique de confinement (5, 23) a un rapport de sa longueur (1) à sa largeur moyenne (D) compris entre 20 et 150.

27. Installation selon la revendication 26, caractérisée en ce que ce rapport vaut entre 25 et 30.

## Claims

1. Method of generating an unpolluted high enthalpy air blast of several seconds duration in which:

   - a mass of feed air intended to constitute the high enthalpy air blast is preheated (4, 22) to a given temperature (To) and stored (5, 23) at a given pressure (Po) in an elongate confinement tunnel (23, 5) with thermally insulative walls (28),
   - a downstream orifice (24A) of said tunnel is kept closed and a blast of high-pressure air is applied to the upstream end of the mass of feed air to compress it quasi adiabatically to obtain a feed air temperature of at least 1 800 K, and
   - the downstream orifice is opened and application of said high-pressure air blast is continued whereby the mass of feed air is expelled through the downstream orifice (24A) in the form of a feed blast the temperature of which remains constant for several seconds.

2. Method according to claim 1 characterised in that the mass of feed air is preheated to a temperature of at least 500 K.

3. Method according to claim 2 characterised in that the mass of feed air is preheated to approximately 1 250 K.

4. Method according to any one of claims 1 to 3 characterised in that the mass of feed air is heated by passing it through a static preheater (4, 22).

5. Method according to any one of claims 1 to 4 characterised in that the mass of feed air is compressed by a compression ratio of at least 5.

6. Method according to any one of claims 1 to 5 characterised in that the high-pressure air blast is preheated to at least approximately the same temperature as the mass of feed air.

7. Method according to any one of claims 1 to 6 characterised in that the mass of feed air and the high-pressure air blast are preheated by passing them through a heater (22) integrated into the tunnel (20).

8. Method according to any one of claims 1 to 7 characterised in that the mass of feed air is at least 5 kg.

9. Method according to any one of claims 1 to 8 characterised in that the interior of the elongate tunnel has a length ($l$) to mean width ratio (D) between 20 and 150.

10. Method according to claim 9 characterised in that said ratio is between 25 and 30.

11. Installation for generating an unpolluted high enthalpy air blast comprising:

- a blow down type wind tunnel (2) adapted to inject a blast of air under pressure into a pressurised air circulation line (6),
- an adiabatic confinement tunnel (5, 23) having an inlet (21A) connected to said pressurised air circulation line (6) and an outlet orifice (24A) provided with a temporary closure device (61) and adapted to contain a mass of feed air in the form of an elongate vein,
- means (4, 22) for heating said mass of feed air to a given temperature, and
- a control system (8, 9, 51, 75) adapted to trigger the arrival of a blast of air from the blow down type wind tunnel on the mass of feed air so as to compress it and heat it and then to open the outlet orifice (24A) of the tunnel at the temporary closure device.

12. Installation according to claim 11 characterised in that the heating means (22) are connected between the pressurised air circulation line (6) and the inlet of the adiabatic confinement tunnel.

13. Installation according to claim 12 characterised in that the heating means (22) and the adiabatic confinement tunnel (23) are parts of a common tunnel (20).

14. Installation according to claim 13 characterised in that said common tunnel (20) comprises an outer shell lined with an insulative layer (28) in the form of a cylindrical jacket (25) closed by ends (26, 27) respectively incorporating an inlet orifice (21A) and the outlet orifice (24A).

15. Installation according to claim 14 characterised in that the insulative layer is separated from the flow of air by protective screens (38, 39).

16. Installation according to claim 15 characterised in that heating elements (50) are provided for preheating said protective screens.

17. Installation according to any one of claims 14 to 16 characterised in that pressure balancing passages (40) are formed in the thickness of said layer.

18. Installation according to any one of claims 13 to 17 characterised in that the heating means (22) comprise a fixed array of tubes (32) parallel to the axis of the common tunnel.

19. Installation according to claim 18 characterised in that the tubes of the array are open at their ends.

20. Installation according to claim 18 or claim 19 characterised in that the heating means are connected to a preheater system (4, 51).

21. Installation according to claim 20 characterised in that the preheater system comprises a compressed air supply (10) connected to the preheater by a line (3) passing through a burner (13).

22. Installation according to claim 20 characterised in that said preheater system comprises an electrical power supply unit (51) connected electrically to the tubes to generate heat therein by the Joule effect.

23. Installation according to any one of claims 13 to 22 characterised in that the temporary closure device (61) comprises two calibrated rupture disks (61A, 61B) of which an upstream rupture disk (61A) is calibrated to a pressure lower than the pressure obtained at the end of compression and a downstream rupture disk (61B) is calibrated to a pressure higher than said pressure, said downstream disk being provided with a destruction unit (75) and the volume between the disks communicating with a compressed air feed line (65) adapted to balance the pressure on either side of the upstream disk.

24. Installation according to claim 23 characterised in that said line communicates with the inlet of the common tunnel.

25. Installation according to claim 23 characterised in that the destruction unit is of the pyrotechnic type.

26. Installation according to any one of claims 11 to 25 characterised in that the adiabatic confinement tunnel (5, 23) has a ratio of its length ($\underline{l}$) to its mean width (D) between 20 and 150.

27. Installation according to claim 26 characterised in that said ratio is between 25 and 30.


**Patentansprüche**

1. Verfahren zur Erzeugung eines nicht verschmutzten Luftstoßes mit hoher Enthalpie während mehrerer Sekunden, gemäß welchem:

   - man eine Nutzluftmasse, die dazu bestimmt ist, den Luftstoß mit hoher Enthalpie zu bilden, in Form eines statischen langgestreckten Strahls im Inneren eines Einschließungstunnels (23, 5) mit thermisch isolierender Wand (28) auf eine gegebene Temperatur (To) vorwärmt (4, 22) und unter einem gegebenen Druck (Po) speichert (5, 23),
   - man eine stromabwärts gelegene Öffnung (24A) dieses Tunnels geschlossen hält und an die stromaufwärts gelegene Stirnfläche dieses Strahls einen Hochdruckluftstoß anlegt, der geeignet ist, die Nutzluftmasse quasi adiabatisch zu verdichten, bis man eine Nutzlufttemperatur von mindestens 1800 K erhält,
   - man die stromabwärts gelegene Öffnung öffnet und den Hochdruckluftstoß weiter anlegt, so daß die Nutzluftmasse während mehrerer Sekunden in einem Nutzluftstoß mit konstanter Temperatur durch die stromabwärts gelegene Öffnung (24A) getrieben wird.

2. Verfahren nach Anspruch 1, dadurch gekennzeichnet, daß man die Nutzluftmasse auf eine Temperatur von mindestens 500 K vorwärmt.

3. Verfahren nach Anspruch 2, dadurch gekennzeichnet, daß man die Nutzluftmasse auf ungefähr 1250 K vorwärmt.

4. Verfahren nach einem der Ansprüche 1 bis 3, dadurch gekennzeichnet, daß man die Nutzluftmasse zum Vorwärmen durch einen statischen Vorwärmer (4, 22) leitet.

5. Verfahren nach einem der Ansprüche 1 bis 4, dadurch gekennzeichnet, daß man die Nutzluftmasse mit einem Verdichtungskoeffizient von mindestens 5 verdichtet.

6. Verfahren nach einem der Ansprüche 1 bis 5, dadurch gekennzeichnet, daß man den Hochdruckluftstoß auf mindestens ungefähr dieselbe Temperatur wie die Nutzluftmasse vorwärmt.

7. Verfahren nach einem der Ansprüche 1 bis 6, dadurch gekennzeichnet, daß man die Nutzluftmasse und den Hochdruckluftstoß zum Vorwärmen durch einen in den Tunnel (20) integrierten Erhitzer (22) leitet.

8. Verfahren nach einem der Ansprüche 1 bis 7, dadurch gekennzeichnet, daß die Nutzluftmasse mindestens 5 kg beträgt.

9. Verfahren nach einem der Ansprüche 1 bis 8, dadurch gekennzeichnet, daß das Verhältnis der Länge (1) des langgestreckten Strahls zu seiner mittleren Breite (D) zwischen 20 und 150 liegt.

10. Verfahren nach Anspruch 9, dadurch gekennzeichnet, daß dieses Verhältnis zwischen 25 und 30 liegt.

11. Anlage zur Erzeugung eines nicht verschmutzten Luftstoßes mit hoher Enthalpie, aufweisend:

   - ein Luftstoßgebläse (2), das ausgelegt ist, um einen Hochdruckluftstoß in eine Druckluftumlaufleitung (6) einzuspritzen,
   - einen adiabatischen Einschließungstunnel (5, 23), der mit einem an diese Druckluftumlaufleitung (6) angeschlossenen Einlaß (21A) und mit einer mit einer Vorrichtung (61) zum zeitweiligen Verschließen versehenen Austrittsöffnung (24A) versehen ist und dazu bestimmt ist, eine Nutzluftmasse in der Form eines langgestreckten Strahls zu enthalten,
   - ein Heizelement (4, 22) zum Erwärmen dieser Nutzluftmasse auf eine gegebene Temperatur,
   - eine Steuereinheit (8, 9, 51, 75), die ausgelegt ist, um den Zutritt eines vom Gebläse kommenden Luftstoßes zur Nutzluftmasse auszulösen, so daß diese verdichtet und erwärmt wird, und dann die Austrittsöffnung (24A) des Tunnels gegenüber der Vorrichtung zum zeitweiligen Verschließen freizugeben.

12. Anlage nach Anspruch 11, dadurch gekennzeichnet, daß das Heizelement (22) zwischen der Druckluftumlaufleitung (6) und dem Einlaß des adiabatischen Einschließungstunnels angeschlossen ist.

13. Anlage nach Anspruch 12, dadurch gekennzeichnet, daß das Heizelement (22) und der adiabatische Einschließungstunnel (23) Teil ein und desselben Gesamttunnels (20) bilden.

14. Anlage nach Anspruch 13, dadurch gekennzeichnet, daß dieser Gesamttunnel (20) eine äußere Schale besitzt, die innen mit einer Isolationsschicht (28) belegt ist und von einer zylindrischen Hülle (25) gebildet ist, die durch Böden (26, 27) geschlossen ist, in denen eine Eintrittsöffnung (21A) und die Austrittsöffnung (24A) vorgesehen ist.

15. Anlage nach Anspruch 14, dadurch gekennzeichnet, daß die Isolationsschicht von der Luftströmung durch Schutzschirme (38, 39) getrennt ist.

16. Anlage nach Anspruch 15, dadurch gekennzeichnet, daß Heizelemete (50) für die Vorwärmung dieser Schutzschirme vorgesehen sind.

17. Anlage nach einem der Ansprüche 14 bis 16 , dadurch gekennzeichnet, daß in der Dicke dieser Schicht Druckausgleichsdurchgänge (40) vorgesehen sind.

18. Anlage nach einem der Ansprüche 13 bis 17, dadurch gekennzeichnet, daß das Heizelement (22) ein festes Netz von zur Achse des Gesamttunnels parallelen Rohren (32) aufweist.

19. Anlage nach Anspruch 18, dadurch gekennzeichnet, daß die Rohre dieses Netzes an ihren Enden offen sind.

20. Anlage nach Anspruch 18 oder Anspruch 19, dadurch gekennzeichnet, daß das Heizelement an ein Vorwärmsystem (4, 51) angeschlossen ist.

21. Anlage nach Anspruch 20, dadurch gekennzeichnet, daß das Vorwärmsystem eine Druckluftversorgung (10) aufweist, die an das Vorwärmelement durch eine einen Brenner (13) durchquerende Leitung (3) angeschlossen ist.

22. Anlage nach Anspruch 20, dadurch gekennzeichnet, daß dieses Vorwärmsystem einen elektrischen Versorgungsblock (51) aufweist, der an die Rohre elektrisch angeschlossen ist, um dort durch den Joule-Effekt die Wärme zu erzeugen.

**23.** Anlage nach einem der Ansprüche 13 bis 22, dadurch gekennzeichnet, daß die Vorrichtung (61) zum zeitweiligen Verschließen zwei Scheiben (61A, 61B) mit kalibriertem Bruch aufweist, und zwar eine stromaufwärts gelegene Scheibe (61A) mit kalibriertem Bruch bei einem Druck, der kleiner als der am Ende der Verdichtung erhaltene Druck ist, und eine stromabwärts gelegene Scheibe (61B) mit kalibriertem Bruch bei einem Druck, der größer als dieser Druck ist, wobei diese stromabwärts gelegene Scheibe mit einem Zerstörungsorgan (75) versehen ist und das Volumen zwischen den Scheiben mit einer Leitung (65) zum Druckluftzutritt für den Druckausgleich der stromaufwärts gelegenen Scheibe verbunden ist.

**24.** Anlage nach Anspruch 23, dadurch gekennzeichnet, daß diese Leitung mit dem Eintritt des Gesamttunnels verbunden ist.

**25.** Anlage nach Anspruch 23, dadurch gekennzeichnet, daß das Zerstörungsorgan vom pyrotechnischen Typ ist.

**26.** Anlage nach einem der Ansprüche 11 bis 25, dadurch gekennzeichnet, daß das Verhältnis der Länge (1) des adiabatischen Einschließungstunnels (5, 23) zu seiner mittleren Breite (D) zwischen 20 und 150 liegt.

**27.** Anlage nach Anspruch 26, dadurch gekennzeichnet, daß dieses Verhältnis zwischen 25 und 30 beträgt.

Fig.1

Fig.2

EP 0 547 936 B1

Fig.3

Fig. 4